# EUROPÄISCHE PATENTSCHRIFT

(11) **EP 2 812 840 B1**
(45) Veröffentlichungstag und Bekanntmachung des Hinweises auf die Patenterteilung: **13.03.2019**
(21) Anmeldenummer: 13701958.4
(22) Anmeldetag: 22.01.2013
(51) Int. Cl.: G06F 21/60, G06F 21/44, G06F 21/57, G06Q 50/06, H04W 4/20, H04L 29/06

(54) **VERFAHREN ZUR INITIALISIERUNG EINES SPEICHERBEREICHS, WELCHER EINEM SMART-METER ZUGEORDNET IST**
METHOD FOR INITIALIZING A MEMORY AREA THAT IS ASSOCIATED WITH A SMART METER
PROCÉDÉ D'INITIALISATION D'UNE ZONE DE MÉMOIRE ASSOCIÉE À UN COMPTEUR INTELLIGENT

(30) Priorität: 07.02.2012 DE 102012201810
(43) Veröffentlichungstag der Anmeldung: 17.12.2014
(73) Patentinhaber: Bundesdruckerei GmbH, 10969 Berlin (DE)
(72) Erfinder: DIETRICH, Frank, 12437 Berlin (DE); PAESCHKE, Manfred, 16348 Wandlitz (DE)
(74) Vertreter: Richardt Patentanwälte PartG mbB
(86) Internationale Anmeldenummer: PCT/EP2013/051092
(87) Internationale Veröffentlichungsnummer: WO 2013/117421

(56) Entgegenhaltungen:
- "Technische Richtlinie BSI TR-03109 Version 0.20", , 10. Oktober 2011 (2011-10-10), XP055059493, Gefunden im Internet: URL:https://www.internet-sicherheit.de/ins titut/service/glossar/allgemeine-studien/b si-studien/?eID=dam_frontend_push&docID=26 40 [gefunden am 2013-04-12]
- "Technische Richtlinie TR-03109 Anhang A Version 0.20", , 10. Oktober 2011 (2011-10-10), XP055059483, Gefunden im Internet: URL:http://www.internet-sicherheit.de/inst itut/service/glossar/allgemeine-studien/bs i-studien/?eID=dam_frontend_push&docID=264 1 [gefunden am 2013-04-12]
- "TECHNISCHE RICHTLINIE BSI TR-03109 Anhang B", , 24. November 2011 (2011-11-24), XP055059481, Gefunden im Internet: URL:https://www.internet-sicherheit.de/ins titut/service/glossar/allgemeine-studien/b si-studien/?eID=dam_frontend_push&docID=26 42 [gefunden am 2013-04-12]
- "Technische Richtlinie TR-03109 Anhang C Version 0.20", , 10. Oktober 2011 (2011-10-10), XP055059491, Gefunden im Internet: URL:http://www.internet-sicherheit.de/inst itut/service/glossar/allgemeine-studien/bs i-studien/?eID=dam_frontend_push&docID=264 3 [gefunden am 2013-04-12]
- "Protection Profile for the Gateway of a Smart Metering System - BSI-CC-PP-0073 - v01.01.01(final draft)", , 26. August 2011 (2011-08-26), XP055059495, Gefunden im Internet: URL:http://web.archive.org/web/20111212205 642/https://www.bsi.bund.de/SharedDocs/Dow nloads/DE/BSI/SmartMeter/PP-SmartMeter.pdf ?__blob=publicationFile [gefunden am 2013-04-12]

## Beschreibung

Die Erfindung betrifft ein Verfahren zur Initialisierung eines Speicherbereichs, wobei der Speicherbereich einem Smart-Meter zugeordnet ist, ein Computerprogrammprodukt und ein Sicherheitsmodul, sowie ein Computersystem zur Initialisierung eines Speicherbereichs, wobei der Speicherbereich einem Smart-Meter zugeordnet ist.

Unter dem Begriff des "Smart Metering" wird allgemein der Gedanke verstanden, Kunden mit elektronischen Energieverbrauchserfassungsgeräten auszustatten, um so neben einer einfachen Erfassung der verbrauchten Energiemenge zum Beispiel über ein Netzwerk sowohl dem Kunden als auch dem Energieversorger weitere Funktionalitäten zur Verfügung zu stellen.

Möglich ist dabei, dass sich der Kunde in Echtzeit über seinen aktuellen Energieverbrauch informieren kann. Unter dem Begriff des "Energieverbrauchs" wird dabei der Verbrauch des Kunden bezüglich jeglicher Art von Energie verstanden, welche in Haushalte und Unternehmen geliefert wird. Dies umfasst neben den Energieformen Strom, Wasser und Gas auch beliebige weitere Energieformen wie beispielsweise Fernwärme.

Zur Erfassung des Energieverbrauchs kommen beim jeweiligen Verbraucher intelligente Messsysteme, auch intelligente Zähler oder "Smart-Meter" genannt, zum Einsatz. Smart-Meter sind Zähler für die verbrauchte Energie. Der Verbraucher kann dabei eine natürliche oder juristische Person sein, welche verschiedene messbare Energieformen wie Strom, Gas, Wasser oder Wärme verbraucht. Ziel der Verwendung von Smart-Metern ist die Implementierung intelligenter Messsysteme, was beispielsweise die Erhebung von variablen Leistungsentgelten in Abhängigkeit von Gesamtnachfrage und Netzauslastung ermöglichen würde. Dadurch können sich Energieversorgungsnetze insgesamt besser ausnutzen lassen.

Aus der technischen Richtlinie des BSI TR-03109 ist es bekannt, einen sogenannten Smart-Meter-Gateway, auch Konzentrator genannt, als eine zentrale Kommunikationseinheit vorzusehen, welche mit einzelnen oder mehreren Smart-Metern kommunizieren kann. Der Gateway ist dazu in der Lage, mit Geräten im sogenannten "Home Area Network" und mit Geräten im "Wide Area Network" zu kommunizieren. Das Home Area Network umfasst dabei alle Smart Meter, welche an den Gateway angekoppelt sind, sowie z.B. private Recheneinheiten der Verbraucher. Die privaten Recheneinheiten können z.B. zur Information über aktuelle, mit den Smart Metern erfasste Energieverbrauchswerte, eingesetzt werden. Das Wide Area Network ist dazu ausgebildet, um eine Kommunikation von Gateway und autorisierten Marktteilnehmern zu ermöglichen. Beispielsweise kann das Gateway die Daten aller Smart-Meter sammeln und diese an eine übergeordnete Sammelstelle, beispielsweise einen Energieversorger oder einen Messstellenbetreiber zur Verfügung stellen.

Allgemein gibt die technische Richtlinie des BSI TR-03109 Version 0.2 eine technische Empfehlung zur Implementierung der Kommunikation von Smart Meter Gateways und behandelt die Sicherheitsaspekte und Interoperabilität bei der Kommunikation mit der Infrastruktur eines solchen Gateways. Anhang A zur technische Richtlinie des BSI TR-03109 beschreibt Sicherheitsanforderungen für den Einsatz kryptographischer Verfahren für die Infrastruktur von Messsystemen im Energiesektor Anhang B zur technische Richtlinie des BSI TR-03109 beschreibt das Sicherheitsmodul eines Smart Metering Gateways. Dabei fokussiert sich der Anhang B auf die vom Sicherheitsmodul bereitzustellende Funktionalität in seiner Betriebsphase, um eine Interoperabilität zwischen den Sicherheitsmodulen verschiedener Hersteller zu gewährleisten. Anhang C zur technische Richtlinie des BSI TR-03109 spezifiziert eine Architektur einer Smart Meter - Public Key Infrastruktur (SM-PKI) spezifiziert, welche eine Authentizität der bei dieser Kommunikation eingesetzten öffentlichen Schlüssel der Kommunikationspartner sicherstellt. Die SM-PKI bildet die Grundlage für eine Absicherung der Kommunikation in der Infrastruktur. Des Weiteren werden Mindestanforderungen an eine Interoperabilität und Sicherheit der PKI aufgestellt, die in der Zertifizierungsrichtlinie (Certificate Policy, CP) für die SM-PKI berücksichtigt werden müssen. Es werden Profile für die einzusetzenden Zertifikate und Sperrlisten vorgegeben. Ferner werden Protokolle für die Beantragung und Zustellung von Zertifikaten spezifiziert.

"Protection Profile for the Gateway of a Smart Metering System" des BSI Version 01.01.01 beschreibt ein Gateway in einem Smart Metering System, insbesondere ein Schutzprofil für eine Kommunikationseinheit eines intelligenten Messsystems für Stoff- und Energiemengen.

Der Erfindung liegt die Aufgabe zugrunde, ein Verfahren zur Initialisierung eines Speicherbereichs, welcher einem Smart-Meter zugeordnet ist, ein Computerprogrammprodukt und ein Sicherheitsmodul bereitzustellen.

Die der Erfindung zugrunde liegenden Aufgaben werden mit den Merkmalen der unabhängigen Patentansprüche gelöst. Bevorzugte Ausführungsformen der Erfindung sind in den abhängigen Patentansprüchen angegeben.

Es wird ein Verfahren zur Initialisierung eines Speicherbereichs geschaffen, wobei der Speicherbereich einem Smart-Meter zugeordnet ist, wobei das Verfahren den Schritt umfasst des Aufbaus eines ersten Kommunikationskanals zwischen einem ersten Computersystem und einem Sicherheitsmodul, wobei das Sicherheitsmodul dem Speicherbereich zugeordnet ist. Das Verfahren umfasst ferner den Schritt der Authentifizierung des ersten Computersystems gegenüber dem Sicherheitsmodul und nach erfolgreicher Authentifizierung des ersten Computersystems gegenüber dem Sicherheitsmodul, Empfang von Daten von dem ersten Computersystem durch das Sicherheitsmodul durch eine gesicherte Übertragung und Speicherung der Daten in den Speicherbereich zur Initialisierung des Speicherbereichs.

Ausführungsformen der Erfindung könnten den Vorteil haben, dass durch den Initialisierungsvorgang in sicherer, eindeutiger und nachvollziehbarer Weise eine Möglichkeit bereitgestellt werden kann, welche eine sichere Kommunikation zwischen dem Smart-Meter und einem autorisierten Marktteilnehmer wie einem Energieversorger oder einem Messstellenbetreiber ermöglicht. Vorzugsweise handelt es sich dabei bei dem ersten Computersystem um ein Computersystem einer vertrauenswürdigen Instanz, welche auch als "Trusted Service Manager" oder "TSM" bezeichnet wird.

Vorzugsweise ist hierfür das Sicherheitsmodul beispielsweise in seinem Auslieferungszustand so konfiguriert, dass ausschließlich diese vertrauenswürdige Instanz in der Lage ist, eine Kommunikation nach erfolgreicher Authentifizierung mit dem Sicherheitsmodul durchzuführen. Dadurch ist gewährleistet, dass insbesondere eine entgeltrelevante Konfiguration des Smart-Meterings nur einer solchen Stelle überlassen wird, welche sowohl von den autorisierten Markteilnehmern, das heißt zum Beispiel den Messstellenbetreibern und den eigentlichen Energieversorgern, als auch den Endverbrauchern als vertrauenswürdig eingestuft ist. Unter "entgeltrelevante Konfiguration" wird im Folgenden verstanden, dass durch diese Konfiguration bezüglich eines Smart-Meters festgelegt wird, wer zum Beispiel zur Abrechnung der durch das Smart-Meter erfassten Energiemengen berechtigt ist. Ferner kann dadurch auch festgelegt werden, welche Personen wie Endverbraucher und autorisierte Marktteilnehmer in welchem Umfang auf die Funktionen und bezüglich des Smart Meters verfügbaren Informationen überhaupt Zugriff haben dürfen. Da diese Festlegung von Seitens einer vertrauenswürdigen Stelle erfolgt, ist dadurch gewährleistet, dass ein Missbrauch dieser Funktionen und Informationen durch unbefugte Dritte ausgeschlossen ist. Die Informationen können dabei z.B. Standortinformationen des Smart Meters, durch das Smart Meter gemessene Werte, Standortinformationen des Speicherbereichs oder jegliche im Speicherbereich enthaltene Werte umfassen.

Durch die Speicherung der empfangenen Daten in dem Speicherbereich zur Initialisierung des Speicherbereichs können somit bezüglich einem oder mehrerer diesem Speicherbereich zugeordneter Smart-Meter z.B. festgelegt werden, an wen zum Beispiel erfasste Energiemengen gemeldet werden, wie die Energiemengen zeitlich gesehen zu erfassen sind, welche Informationen oder "Attribute" ein autorisierter Marktteilnehmer bezüglich des Smart-Meters erfassen und/oder abfragen darf. Ferner kann dadurch auch festgelegt werden, inwieweit ein zum Beispiel Endverbraucher Zugriff auf die Informationen hat, welche bezüglich des Smart-Meters entweder im Smart-Meter selber oder an einem dem Smart-Meter zugeordneten Gerät wie einem Gateway oder dem Sicherheitsmodul hinterlegt sind.

Ausführungsformen der Erfindung sind also insgesamt besonders vorteilhaft, da ein besonders hohes Maß an Vertrauenswürdigkeit hinsichtlich der bezüglich des Smart-Meters hinterlegten Daten "Konfigurationsdaten" als auch hinsichtlich des Datenschutzes der durch das Smart-Meter erfassten Messdatenelemente sowohl für Endverbraucher als auch für Messstellenbetreiber und Energieversorger gewährleistet ist.

Nach einer Ausführungsform der Erfindung erfolgt die gesicherte Übertragung durch eine Ende-zu-Ende-Verschlüsselung zwischen dem ersten Computersystem und dem Sicherheitsmodul. Dies ermöglicht es, die Verbindung zwischen dem Sicherheitsmodul und dem ersten Computersystem über beliebige Netzwerke aufzubauen, da aufgrund der Ende-zu-Ende-Verschlüsselung keine Änderungen der über die Verbindung übertragenen Daten durch Dritte vorgenommen werden können. Allgemein kann die Erfindung dadurch realisiert werden, dass die gesamte Kommunikation zwischen dem ersten Computersystem und dem Sicherheitsmodul über beliebige Arten von Netzwerken erfolgen kann. Dies umfasst eine Kommunikation über das Internet, eine Kommunikation durch drahtlose Netzwerkverbindungen wie beispielsweise Mobilfunk, als auch eine Kommunikation unter Verwendung einer Trägerfrequenzanlage. Letztere ist auch unter dem Namen: "Powerline Datenübertragung" bekannt und umfasst Vorrichtungen zur Datenübertragung über vorhandene Kommunikations- oder Stromnetze.

Nach einer weiteren Ausführungsform der Erfindung erfolgt die Authentifizierung des ersten Computersystems gegenüber dem Sicherheitsmodul mit Hilfe eines ersten Zertifikats des ersten Computersystems. Das Sicherheitsmodul kann dann anhand dieses ersten Zertifikats überprüfen, ob das erste Computersystem die erforderliche Berechtigung für einen Schreibzugriff auf den Speicherbereich hat, bevor ein solcher Schreibzugriff durch das erste Computersystem durchgeführt werden kann.

Nach einer Ausführungsform der Erfindung umfasst die Authentifizierung ein Challenge-Response-Verfahren. Z.B. kann ein kryptografisches Protokoll, beispielsweise basierend auf einem symmetrischen Schlüssel oder einem asymmetrischen Schlüsselpaar zum Einsatz kommen, um eine Authentifizierung des ersten Computersystems gegenüber dem Sicherheitsmodul vorzunehmen.

Nach einer Ausführungsform der Erfindung sind entweder der Speicherbereich und das Sicherheitsmodul im dem Smart-Meter selbst enthalten oder aber der Speicherbereich und das Sicherheitsmodul sind in einem Smart-Meter-Gateway enthalten, wobei das Smart-Meter an dem Smart-Meter-Gateway ankoppelbar ist. Möglich ist beispielsweise, dass das Smart-Meter und der Smart-Meter-Gateway über eine drahtlose und/oder drahtgebundene Kommunikationsverbindung miteinander gekoppelt sind.

In allen Fällen dient der Speicherbereich unter anderem dazu, solche Daten wie Zertifikate und kryptografische Schlüssel dauerhaft zu speichern, welche einen zuverlässigen und sicheren Datenaustausch zwischen den die Smart-Meter betreibenden Endkunden und den diesen Smart-Metern zugeordneten Energieversorgern oder Messstellenbetreibern dauerhaft geschützt gewährleisten.

Insbesondere im Falle dessen der Speicherbereich in dem Smart-Meter-Gateway enthalten ist, ergibt sich der Vorteil, dass eine einzelne zentrale Einheit vorgesehen werden kann, welche für beliebige Kommunikationen mit außerhalb des Netzwerks Smart-Meter-Smart-Meter-Gateway befindlichen Teilnehmern ein einzelnes zentrales Kommunikations-Interface bereitstellt..

Erfindungsgemäß sind dem Smart Meter Konfigurationsdaten zum Betrieb des Smart Meters und/oder Gateways zugeordnet. Diese Konfigurationsdaten können in dem Speicherbereich gespeichert sein. Unter Konfigurationsdaten werden dabei jegliche Arten von Daten verstanden, welche den Betrieb des Smart Meters und/oder Gateways konfigurieren. Dies umfasst auch die Art und Weise der Datenerfassung wie z.B. die Taktung der Messdatenerfassung, Messdatenauswertung, Messdatenaggregation, Messdatenumwandlung, sowie standortspezifische Daten für Smart Meter und Gateway.

Erfindungsgemäß sind durch das Smart-Meter Energieverbrauchspezifische Messdatenelemente erfassbar. Unter "Messdatenelemente" wird dabei jegliche Art von Daten verstanden, aus einer Energieverbrauchsmessung mit einem Smart Meter resultieren. Dies umfasst z.B. einen Zeitpunkt der Erfassung von Messdaten der Energieverbrauchsmessung, einzelne Messdatenpunkte zum jeweiligen Zeitpunkt und Informationen über das Zustandekommen der Messdaten wie zum Beispiel Stromstärke, Spannung, Wasserdruck, Wassertemperatur oder Gasdruck.

Erfindungsgemäß beinhalten die von dem ersten Computersystem empfangenen Daten eine Angabe derjenigen Messdatenelemente und/oder Konfigurationsdaten, für welche der Energieversorger und/oder der Messstellenbetreiber für einen Lesezugriff berechtigt ist.

Durch die Bereitstellung eines solchen Berechtigungskonzepts kann spezifisch für jeden Energieversorger und/oder Messstellenbetreiber im Voraus festgelegt werden, welche Messdatenelemente und/oder Konfigurationsdaten überhaupt durch diesen Energieversorger und/oder Messstellenbetreiber ausgelesen oder erfasst werden dürfen. Dadurch ist ein Datenschutz in hohem Maß gewährleistet. Eine Akzeptanz eines solchen Datenschutzkonzepts ist insbesondere dadurch gegeben, dass die Leseberechtigung durch eine vertrauenswürdige Stelle, nämlich das erste Computersystem autorisiert wird.

Erfindungsgemäß umfasst das Verfahren ferner den Schritt des Aufbaus eines zweiten Kommunikationskanals zwischen einem zweiten Computersystem des Energieversorgers oder Messstellenbetreibers und dem Sicherheitsmodul. Dem folgt eine gegenseitige Authentifizierung des zweiten Computersystems und des Sicherheitsmoduls, wobei nach Ausführungsformen die Authentifizierung mit Hilfe des zweiten Zertifikats und mit Hilfe eines dritten Zertifikats des Sicherheitsmoduls erfolgt. Nach erfolgreicher gegenseitiger Authentifizierung kann das Übermitteln zumindest eines Teils der in den Daten spezifizierten Messdatenelemente und/oder Konfigurationsdaten von dem Sicherheitsmodul an das zweite Computersystem durch eine gesicherte Übertragung erfolgen. Alternativ oder zusätzlich ist es auch möglich, dass in dem zweiten Zertifikat ebenfalls Messdatenelemente und/oder Konfigurationsdaten spezifiziert sind, für welche der Energieversorger und/oder der Messstellenbetreiber für einen Lesezugriff berechtigt ist. In diesem Fall erfolgt zusätzlich oder alternativ das Übermitteln zumindest eines Teils der in dem zweiten Zertifikat spezifizierten Messdatenelemente und/oder Konfigurationsdaten von dem Sicherheitsmodul an das zweite Computersystem durch die gesicherte Übertragung.

Durch die genannten Verfahrensschritte wird sichergestellt, dass ausschließlich dann Messdatenelemente und/oder Konfigurationsdaten zwischen dem zweiten Computersystem des Energieversorgers oder Messstellenbetreibers und dem Sicherheitsmodul übertragen werden, wenn sowohl Energieversorger oder Messstellenbetreiber und Endverbraucher an einer solchen Datenübertragung überhaupt interessiert sind und wenn beide Seiten in eine solche Datenübertragung zuvor eingewilligt haben. Liegt eine solche gegenseitige Einwilligung nicht vor, so kann beispielsweise der Energieversorger oder der Messstellenbetreiber die Echtheit des dritten Zertifikats des Sicherheitsmoduls nicht bestätigen oder aber das Sicherheitsmodul ist im Gegenzug nicht in der Lage, das zweite Zertifikat des Energieversorgers oder Messstellenbetreibers als echt und vertrauenswürdig zu erkennen. Vorzugsweise könnten bei der Initialisierung des Speicherbereichs dem Sicherheitsmodul solche Informationen zur Verfügung gestellt werden, welche das Sicherheitsmodul in die Lage versetzen würden, die Echtheit des zweiten Zertifikats zu bestätigen. Selbst wenn sich jedoch Sicherheitsmodul und Energieversorger oder Messstellenbetreiber gegenseitig vertrauen würden, ist dennoch für den Endverbraucher gesichert, dass der Messstellenbetreiber oder Energieversorger auch lediglich die Daten auslesen kann, welche zuvor eindeutig als "Messdatenelemente" und/oder "Konfigurationsdaten" für diesen Zweck definiert wurden.

Eine Akzeptanz eines solchen Datenschutzkonzepts ist insbesondere dadurch gegeben, dass Messdatenelemente und/oder Konfigurationsdaten nach einer Ausführungsform der Erfindung zusätzlich oder alternativ in einem amtlichen Dokument, nämlich einem Zertifikat, enthalten sind. Da das Zertifikat fälschungssicher ist und dessen Echtheit ohne Weiteres durch den Endverbraucher überprüft werden kann wird auch dadurch ein besonders hohes Maß an Vertrauenswürdigkeit hinsichtlich der Mitteilung der spezifizierten Messdatenelemente und/oder Konfigurationsdaten ermöglicht.

Nach einer Ausführungsform erfolgt der Aufbau des zweiten Kommunikationskanals durch das Sicherheitsmodul, wobei die Übermittlung des Teils der in den Daten und/oder in dem zweiten Zertifikat spezifizierten Messdatenelemente und/oder Konfigurationsdaten durch ein Push-Verfahren erfolgt. Dadurch ist es also möglich, dass beispielsweise in einer bei der zum Beispiel Initialisierung des Speicherbereichs festgelegten zeitlichen Reihenfolge das Sicherheitsmodul den zweiten Kommunikationskanal aufbaut, um dadurch in regelmäßigen Abständen zum Beispiel Energieverbrauchswerte an das zweite Computersystem zu übermitteln. Möglich ist dabei auch zum Beispiel, dass der zweite Kommunikationskanal nur unter bestimmten bei Initialisierung des Speicherbereichs festgelegten Bedingungen aufgebaut wird. Solche Bedingungen können zum Beispiel eine Aggregation der erfassten Energiemengen oberhalb eines vorbestimmten Schwellwertes umfassen.

Nach einer weiteren Ausführungsform der Erfindung umfassen die von dem ersten Computersystem empfangenen Daten eine Energieerfassungsanwendung und/oder zumindest einen Teil der Konfigurationsdaten. Dadurch ist es möglich, bei der Initialisierung des Speicherbereichs durch das erste Computersystem eine Energieerfassungsanwendung und/oder Konfigurationsdaten bereitzustellen, welche in durch beispielsweise den Messstellenbetreiber oder den Energieversorger zuvor spezifizierter Weise eine Energieerfassung und Energieabrechnung ermöglichen. Außerdem könnte durch eine solche Energieerfassungsanwendung und/oder durch Konfigurationsdaten festgelegt werden, wie eine Energieerfassung zu erfolgen hat. Diese kann beispielsweise eine sekundengenaue Abrechnung oder aber eine Abrechnung mit aggregiertem Energieverbrauch über einen vorbestimmten Zeitraum erfassen. Ferner kann die Energieerfassungsanwendung auch eine Schnittstelle bereitstellen, über welcher ein Endverbraucher in vordefinierter Weise eine Überwachung seines Energieverbrauchs selbst vornehmen kann.

Es sei an dieser Stelle angemerkt, dass Ausführungsformen der Erfindung besonders dann vorteilhaft sind, wenn der Speicherbereich und das Sicherheitsmodul in dem Smart-Meter-Gateway enthalten sind. In diesem Fall ist z.B. möglich, den Smart-Meter-Gateway mit verschiedenen Smart-Metern zu koppeln, sodass bei einem Initialisierungsvorgang spezifische Energieerfassungsanwendungen und/oder Konfigurationsdaten für jeden Smart-Meter und gegebenenfalls pro Smart-Meter für verschiedene Energieversorger oder Messstellenbetreiber bereitgestellt werden können. Dies umfasst auch die erneute Verwendung der Verfahrensschritte zur Initialisierung des Speicherbereichs bezüglich eines Updates des Inhalts des Speicherbereichs, beispielsweise aufgrund einer Aktualisierung einer Energieerfassungsanwendung und/oder von Konfigurationsdaten. Ferner umfasst dies die Möglichkeit des späteren Hinzufügens von einer oder weiteren Energieerfassungsanwendungen und/oder weiterer Konfigurationsdaten zu dem Speicherbereich. Dadurch ist durch die Bereitstellung eines einzelnen Gateways eine nahezu unbegrenzte Erweiterungsfähigkeit mit einer Vielzahl verschiedener Smart-Meter und die Möglichkeit einer Zugriffskontrolle auf den Gateway für eine Vielzahl von verschiedenen Energieversorgern oder Messstellenbetreibern möglich. Dies ist insbesondere im Hinblick auf die Verwendung beispielsweise in Mehrfamilienhäusern relevant, in welchen verschiedene Teilnehmer zu verschiedenen Uhrzeiten und Wochentagen verschiedene Energieversorger oder Messstellenbetreiber zur Energieabrechnung und -versorgung bestimmt haben.

Nach einer weiteren Ausführungsform initiiert die Energieerfassungsanwendung den Aufbau des zweiten Kommunikationskanals. Wie bereits oben erwähnt ist es damit möglich, insbesondere in zuvor festgelegten Zeitabständen, eine Meldung der erfassten Energiemengen an den Energieversorger oder Messstellenbetreiber zu senden. Dies erspart also dem Energieversorger oder Messstellenbetreiber die Notwendigkeit, eine zeitlich sinnvolle Erfassung des erfassten Energieverbrauchs vorzunehmen. Wird beispielsweise der Energieverbrauch nur dann an das zweite Computersystem gemeldet, wenn ein Mindest-Energieverbrauch überschritten wird, erspart sich somit das zweite Computersystem eine unter Umständen überflüssige Abfrage, weil der Gesamtenergieverbrauch noch nicht diesen Schweflwert überschritten hat. Nichtsdestotrotz ist es selbstverständlich möglich, in regelmäßigen Abständen, zum Beispiel bei Erstellung einer Endabrechnung, von Seitens des zweiten Computersystems eine Kommunikation mit dem Sicherheitsmodul aufzubauen und damit die Messdatenelemente von dem Sicherheitsmodul an das zweite Computersystem zu übertragen.

Nach einer weiteren Ausführungsform der Erfindung umfasst das Verfahren ferner die Schritte des Aufbaus eines dritten Kommunikationskanals zwischen dem zweiten Computersystem und dem ersten Computersystem, einer Authentifizierung des zweiten Computersystems gegenüber dem ersten Computersystem und nach erfolgreicher Authentifizierung des zweiten Computersystems gegenüber dem ersten Computersystem ein Empfang einer Anforderung zur Initialisierung des Speicherbereichs von dem zweiten Computersystem durch das erste Computersystem, wobei die Anforderung eine Kennung des Speicherbereichs umfasst, wobei die Kennung den Speicherbereich eindeutig identifiziert.

Dadurch ist es möglich, dass das zweite Computersystem des Energieversorgers oder Messstellenbetreibers unter Verwendung des ersten Computersystems die Durchführung der Initialisierung des Speicherbereichs veranlasst. Erst wenn jedoch das erste Computersystem das zweite Computersystem als vertrauenswürdig eingestuft hat, wird das zweite Computersystem den ersten Kommunikationskanal zu dem Sicherheitsmodul aufbauen und den Initialisierungsvorgang durchführen. Dadurch, dass durch das zweite Computersystem eine eindeutige Kennung des zu initialisierenden Speicherbereichs an das erste Computersystem übermittelt wird, ist das erste Computersystem auch eindeutig dazu in der Lage, genau das Sicherheitsmodul zu adressieren, welches auch tatsächlich dem gewünschten zu initialisierenden Speicherbereich zugeordnet ist. Damit ist insgesamt eine einfache und effiziente Möglichkeit geschaffen, mittels welcher kommuniziert werden kann, welche Smart-Meter von Endverbrauchern zur Datenerfassung bezüglich entsprechender Messstellenbetreiber oder Energieversorger verwendet und konfiguriert werden sollen.

Nach einer weiteren Ausführungsform der Erfindung ist die Kennung des Speicherbereichs durch eine Kennung des Sicherheitsmoduls gegeben. Dadurch wird gewährleistet, dass Sicherheitsmodul und Speicherbereich untrennbar miteinander verknüpft sind. Einer eindeutigen Adressierung des Sicherheitsmoduls entspricht damit einer eindeutigen Adressierung des Speicherbereichs. Befindet sich der Speicherbereich in einem Smart-Meter-Gateway, so ist dadurch sichergestellt, dass nicht nachträglich in unbefugter Weise der Gateway durch einen anderen Gateway ersetzt werden kann. Beispielsweise könnte dadurch unterbunden werden, dass einem Messstellenbetreiber Werte von einem "gehackten" Gateway zur Verfügung gestellt werden, welcher nur sporadisch mit entsprechenden Smart-Metern verbunden ist und damit eigentlich überhaupt keine reale Energieverbrauchserfassung durchführt. Der besagte Speicherbereich kann ausschließlich über das Sicherheitselement durch das erste Computersystem beschrieben werden und eine Adressierung dieses Speicherbereichs ist aufgrund der Kennung eindeutig. Die Verwendung eines anderen Gateways mit anderem Speicherbereich wäre in diesem Fall also grundsätzlich unmöglich, da ein Aufspielen der zur Energieerfassung relevanten Daten seitens des ersten Computersystems nie stattfinden würde.

Nach einer Ausführungsform der Erfindung handelt es sich bei der Kennung des Sicherheitsmoduls um einen öffentlichen Schlüssel des Sicherheitsmoduls oder eine IPv6-Adresse des Sicherheitsmoduls. Die Verwendung des öffentlichen Schlüssels des Sicherheitsmoduls als Kennung des Sicherheitsmoduls und damit als Kennung des Speicherbereichs hat den Vorteil, dass dadurch ein GUID (Globally Unique Identifier) bereitgestellt werden kann, welcher mit nahezu absolut sicherer Wahrscheinlichkeit eindeutig ist. Dies würde eine einfache Verwaltung der Kennungen durch einfache Vergabe eines möglichst langen öffentlichen Schlüssels ermöglichen. Im Falle dessen es sich bei der Kennung des Sicherheitsmoduls um eine IPv6-Adresse handelt, wäre es in einfacher Weise möglich, über bestehende Netzwerke eine eindeutige Adressierung des Sicherheitsmoduls vorzunehmen.

Nach einer weiteren Ausführungsform der Erfindung beinhaltet das dritte Zertifikat den öffentlichen Schlüssel des Sicherheitsmoduls. Dieser öffentliche Schlüssel ist dabei einem privaten Schlüssel zugeordnet, welcher in einem geschützten Speicherbereich im Sicherheitsmodul gespeichert ist. Das Zertifikat kann nach einem Public Key Infrastructure (PKI)-Standard erstellt worden sein, beispielsweise nach dem X.509-Standard.

An dieser Stelle sei angemerkt, dass die beschriebenen Zertifikate (erstes, zweites und drittes Zertifikat) nicht zwangsläufig in einem Speicher der hierfür vorgesehenen Vorrichtung (erstes Computersystem, zweites Computersystem, Sicherheitsmodul) gespeichert sein müssen, alternativ oder zusätzlich ist es auch möglich, dass die Zertifikate auf einem öffentlichen Verzeichnisserver abgespeichert sind.

Nach einer Ausführungsform der Erfindung wird das Sicherheitsmodul untrennbar mit dem Smart-Meter oder dem Smart-Meter-Gateway verbunden. Unter "untrennbar" wird dabei eine dauerhafte Verknüpfung von Sicherheitsmodul und Smart-Meter oder Smart-Meter-Gateway verstanden, welche eine Funktionsfähigkeit des Sicherheitsmoduls gewährleistet. Sobald versucht wird, das Sicherheitsmodul vom Smart-Meter oder dem Smart-Meter-Gateway zu entfernen, geht das Sicherheitsmodul in einen unbrauchbaren, d.h. funktionsunfähigen Zustand über. Dies kann entweder durch eine elektronische Selbstzerstörung, Selbstdeaktivierung oder eine physikalische Zerstörung oder Deaktivierung des Sicherheitsmoduls gewährleistet sein. Im einfachsten Fall könnte das Sicherheitsmodul in einem Gehäuse des Smart-Meters oder Smart-Meter-Gateways eingegossen sein, sodass aufgrund des "Aufbrechens" dieser Gussverbindung die Zerstörung des Sicherheitsmoduls resultiert.

Vorzugsweise wird aufgrund des Verbindens des Sicherheitsmoduls mit dem Smart-Meter oder dem Smart-Meter-Gateway ein Verknüpfungsprozess auf dem Smart-Meter oder dem Smart-Meter-Gateway gestartet, wobei durch den Verknüpfungsprozess eine untrennbare logische Verknüpfung zwischen dem Sicherheitsmodul und dem Smart-Meter oder dem Smart-Meter-Gateway hergestellt wird. Zum Beispiel umfasst diese untrennbare logische Verknüpfung einen irreversiblen Kopiervorgang des dritten Zertifikats oder der Kennung des Sicherheitsmoduls auf dem Speicherbereich.

Nach einer Ausführungsform der Erfindung wird das Sicherheitsmodul in Form einer Chipkarte bereitgestellt. Beispielsweise könnte das Sicherheitsmodul in Form einer Chipkarte durch den Betreiber des ersten Computersystems vorkonfiguriert werden, indem auf der Chipkarte diejenige Informationen gespeichert werden, welche es ermöglichen, eine Authentifizierung des ersten Computersystems gegenüber dem Sicherheitsmodul zur späteren Durchführung des Initialisierungsvorgangs zu ermöglichen.

Nach einer Ausführungsform der Erfindung handelt es sich bei dem ersten Computersystem um ein behördlich zertifiziertes Trustcenter.

In einem weiteren Aspekt betrifft die Erfindung ein Computerprogrammprodukt mit von einem Prozessor ausführbaren Instruktionen zur Durchführung der oben beschriebenen Verfahrensschritte.

In einem weiteren Aspekt betrifft die Erfindung ein Sicherheitsmodul, wobei das Sicherheitsmodul einen Speicherbereich zuordenbar ist, wobei der Speicherbereich einem Smart-Meter zugeordnet ist, wobei das Sicherheitsmodul zur Initialisierung des Speicherbereichs ausgebildet ist, wobei das Sicherheitsmodul ferner aufweist:
- Mittel zum Aufbau eines ersten Kommunikationskanals mit einem ersten Computersystem,
- Mittel zur Authentifizierung des ersten Computersystems gegenüber dem Sicherheitsmodul,
- Mittel zum Empfang von Daten von dem ersten Computersystem durch das Sicherheitsmodul durch eine gesicherte Übertragung und Speicherung der Daten in dem Speicherbereich zur Initialisierung des Speicherbereichs nach erfolgreicher Authentifizierung des ersten Computersystems gegenüber dem Sicherheitsmodul.

Ein erstes Computersystem zur Initialisierung eines Speicherbereichs, wobei der Speicherbereich einem Smart-Meter zugeordnet ist, umfasst:
- Mittel zum Aufbau eines Kommunikationskanals zwischen dem ersten Computersystem und einem Sicherheitsmodul, wobei das Sicherheitsmodul dem Speicherbereich zugeordnet ist,
- Mittel zur Authentifizierung des ersten Computersystems gegenüber dem Sicherheitsmodul,
- Mittel zum Senden von Daten von dem ersten Computersystem an das Sicherheitsmodul durch eine gesicherte Übertragung zur Speicherung der Daten durch das Sicherheitsmodul in den Speicherbereich zur Initialisierung des Speicherbereichs nach erfolgreicher Authentifizierung des ersten Computersystems gegenüber dem Sicherheitsmodul.

Im Folgenden werden bevorzugte Ausführungsformen der Erfindung anhand der Zeichnungen näher erläutert. Es zeigen:
- Figur 1: ein Blockdiagramm eines Systems zur Implementierung des obig beschriebenen Verfahrens,
- Figur 2: ein Flussdiagramm einer Ausführungsform eines Verfahrens zur Initialisierung eines Speicherbereichs,
- Figur 3: ein Flussdiagramm eines Verfahrens zum Empfangen bzw. Abrufen von Messdatenelementen,
- Figur 4: ein Flussdiagramm eines Verfahrens zur Bereitstellung eines Sicherheitsmoduls.

Im Folgenden werden einander ähnliche Elemente mit gleichen Bezugszeichen gekennzeichnet.

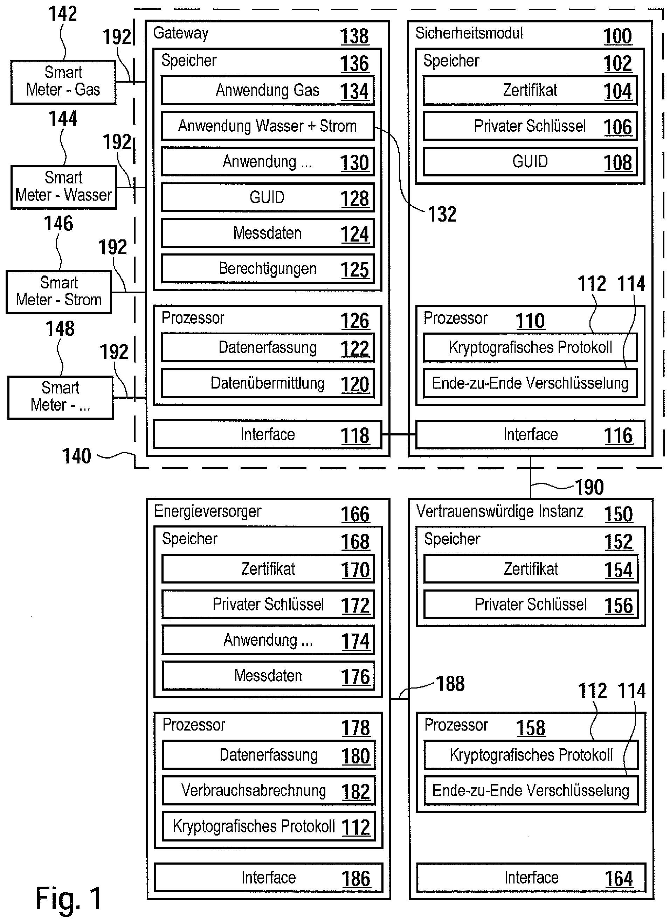

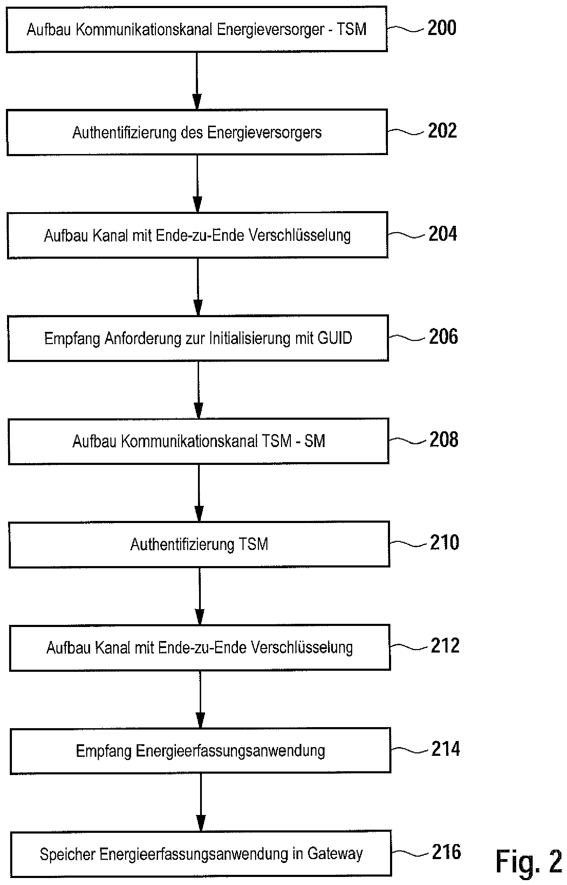

Die Figur 1 zeigt ein Blockdiagramm eines Gesamtsystems zur Initialisierung eines Speicherbereichs. Zusammen mit den in Figur 2 gezeigten Verfahrensschritten zur Initialisierung eines Speicherbereichs soll im Folgenden ohne der Beschränkung der Allgemeinheit gezeigt werden, wie ein Speicherbereich 136 eines Gateways 138, welcher einer Vielzahl von Smart-Metern 142, 144, 146, 148 zugeordnet ist, initialisiert werden kann.

Die Smart-Meter 142 - 148 dienen dabei der Erfassung verschiedener Energieverbrauchswerte bezüglich zum Beispiel Gas (Smart-Meter 142), Wasser (Smart-Meter 144), Strom (Smart-Meter 146) und weiteren nicht näher spezifizierten Energieformen (Smart-Meter 148). Die Smart-Meter sind dabei über entsprechende Kommunikationsverbindungen 192 mit dem Interface 118 des Gateways 138 verbunden.

Es sei davon ausgegangen, dass ein Sicherheitsmodul 100 fest und untrennbar mit dem Gateway 138 verbunden ist, sodass insgesamt durch die Kombination des Gateways 138 und des Sicherheitsmoduls 100 eine untrennbare Einheit 140 gegeben ist. Der Gateway 138 und das Sicherheitsmodul 100 kommunizieren über jeweilige Interfaces 118 bzw. 116 miteinander. Über das Interface 116 findet ferner eine Kommunikation mit autorisierten Markteilnehmern und dritten Personen bzw. Instanzen statt, welche nicht innerhalb des durch die Einheit 140 und den Smart-Metern 142 - 148 gebildeten Netzwerks befindlich sind. Die Kommunikation zwischen Interface 116 des Sicherheitsmoduls 100 und weiteren Kommunikationsteilnehmern erfolgt dabei über eine Kommunikationsverbindung 190. Hierbei kann es sich beispielsweise um eine Powerline-Verbindung oder eine Kommunikationsverbindung über ein mobiles Telekommunikationsnetz oder das Internet handeln.

Das Sicherheitsmodul 100 hat einen elektronischen Speicher 102 mit geschütztem Speicherbereich 106 und 108. Der geschützte Speicherbereich 106 dient zur Speicherung eines privaten Schlüssels des Sicherheitsmoduls 100 und der Speicherbereich 108 dient zur Speicherung einer Kennung des Sicherheitsmoduls "GUID" (Globally Unique Identifier). Bei dem GUID kann es sich beispielsweise um eine IPv6-Adresse des Sicherheitsmoduls 100 handeln.

Der elektronische Speicher 102 kann ferner einen Speicherbereich 104 zur Speicherung eines Zertifikats aufweisen. Das Zertifikat beinhaltet einen öffentlichen Schlüssel, der dem in dem geschützten Speicherbereich 106 gespeicherten privaten Schlüssel zugeordnet ist. Das Zertifikat kann nach einem Public Key Infrastructure (PKI)-Standard erstellt worden sein, beispielsweise nach dem X.509-Standard.

Das Zertifikat muss nicht zwangsläufig mit dem elektronischen Speicher 102 des Sicherheitsmoduls 100 gespeichert sein. Alternativ oder zusätzlich kann das Zertifikat auch in einem öffentlichen Verzeichnisserver gespeichert sein.

Das Sicherheitsmodul 100 hat einen Prozessor 110 zur Ausführung von Programminstruktionen 112 und 114. Durch Ausführung der Programminstruktionen 112 "kryptografisches Protokoll" wird beispielsweise eine Authentifizierung einer vertrauenswürdigen Instanz 150 oder eines Energieversorgers 166 gegenüber dem Sicherheitsmodul 100 ermöglicht. Bei dem kryptografischen Protokoll kann es sich beispielsweise um ein Challenge-Response-Protokoll basierend auf einem symmetrischen Schlüssel oder einem asymmetrischen Schlüsselpaar handeln.

Möglich ist natürlich auch eine gegenseitige Authentifizierung von Sicherheitsmodul und vertrauenswürdiger Instanz bzw. Energieversorger.

Die Programminstruktionen 114 dienen zur Ende-zu-Ende-Verschlüsselung von zwischen dem Sicherheitsmodul 100 und der vertrauenswürdigen Instanz 150 bzw. dem Energieversorger 166 zu übertragenden Daten. Für die Ende-zu-Ende-Verschlüsselung kann ein symmetrischer Schlüssel verwendet werden, der beispielsweise anlässlich der Ausführung des kryptografischen Protokolls zwischen dem Sicherheitsmodul 100 und den weiteren Teilnehmern 150 bzw. 166 vereinbart wird.

Ähnlich wie das Sicherheitsmodul 100 weist auch die vertrauenswürdige Instanz 150 einen elektronischen Speicher 152 und einen geschützten Speicherbereich 156 zur Speicherung eines privaten Schlüssels der vertrauenswürdigen Instanz auf. In dem Speicher 152 kann auch noch ein Zertifikat 154 der vertrauenswürdigen Instanz enthalten sein. Dieses Zertifikat kann jedoch ebenfalls auf einem zentralen Zertifikatserver gespeichert sein.

Ein Prozessor 158 der vertrauenswürdigen Instanz 150 weist wiederum die obig bezüglich des Sicherheitsmoduls 100 beschriebenen Programminstruktionen 112 und 114 zur Implementierung eines kryptografischen Protokolls und zur Durchführung einer Ende-zu-Ende-Verschlüsselung auf. Das kryptografische Protokoll und die Ende-zu-Ende-Verschlüsselung können zur Kommunikation über das Interface 164 mit dem Energieversorger 166 oder mit dem Sicherheitsmodul 100 verwendet werden. Das Zertifikat 154 beinhaltet wiederum einen öffentlichen Schlüssel, der dem in dem geschützten Speicherbereich 156 gespeicherten privaten Schlüssel zugeordnet ist.

Bei dem "Energieversorger" 166 handelt es sich um ein Computersystem des Energieversorgers, welches wiederum einen elektronischen Speicher 168 und einen Prozessor 178 aufweist. Ferner ist diesem Computersystem ein Interface 186 zugeordnet, über welches eine Kommunikation mit der vertrauenswürdigen Instanz 150 bzw. dem Sicherheitsmodul ermöglicht wird.

Der elektronische Speicher 168 des Energieversorgers 166 weist einen geschützten Speicherbereich 172 mit einem privaten Schlüssel auf, wobei der private Schlüssel einem öffentlichen Schlüssel zugeordnet ist, welcher in einem Zertifikat 170 ebenfalls im elektronischen Speicher 168 enthalten ist. Ferner ist im Speicher 168 ein Speicherbereich für eine oder mehrere Anwendungen vorgesehen, wobei diese Anwendungen beispielsweise eine entgeltrelevante Konfiguration des Gateways 138 ermöglichen. Ebenfalls im elektronischen Speicher 168 können Messdaten 176 gespeichert sein, welche zuvor von dem Gateway 138 empfangen wurden.

Der Prozessor 178 weist Programminstruktionen 180 zur Erfassung der durch den Gateway 138 gelieferten Verbrauchsdaten und des Weiteren optional zur Ausführung von Verfahrensschritten zur Verbrauchsabrechnung in Abhängigkeit von den ermittelten Messdaten (Programminstruktionen 182) auf. Die Programminstruktionen zur Ausführung von Schritten eines kryptografischen Protokolls 112 sowie nicht gezeigte Programminstruktionen zur Durchführung einer Ende-zu-Ende-Verschlüsselung können ebenfalls vorgesehen sein, wobei durch diese Programminstruktionen eine sichere Kommunikation mit der vertrauenswürdigen Instanz 150 bzw. dem Sicherheitsmodul 100 ermöglicht wird.

Soll nun ein Neukunde dem Energieversorger 166 zugeordnet werden, könnte beispielsweise nach einer ersten Installation der Smart-Meter 142 - 148 und der Bereitstellung von Gateway 138 mit Sicherheitsmodul 102 ein Initialisierungsvorgang des Sicherheitsmoduls stattfinden. Dieser Initialisierungsvorgang könnte dadurch angestoßen werden, dass der Neukunde (ein Endverbraucher) oder eine bestimmte technische Instanz, welche die Smart-Meter installiert hatte, dem Energieversorger 166 eine entsprechende Mitteilung hierüber erstatten. Diese Mitteilung sollte vorzugsweise die GUID 108 des Sicherheitsmoduls 100 umfassen, da dadurch eine eindeutige Identifizierung des Sicherheitsmoduls 100 gegenüber dem Energieversorger 166 möglich ist.

Nachdem der Energieversorger 166 diese Mitteilung über sein Interface 186, beispielsweise über eine Webschnittstelle einer entsprechende Webseite erhalten hat, baut der Energieversorger 166 einen Kommunikationskanal zur vertrauenswürdigen Instanz 150 auf. Dieser Schritt ist in Figur 2 mit Bezugszeichen 200 bezeichnet. Die vertrauenswürdige Instanz kann hierbei beispielsweise ein sogenannter "Trusted Service Manager TSM" sein, also eine behördlich zertifizierte Instanz, welche in elektronischen Kommunikationsprozessen die jeweilige Identität des Kommunikationspartners bescheinigt.

Nach dem Aufbau des Kommunikationskanals in Schritt 200 erfolgt eine Authentifizierung des Energieversorgers 166 im Schritt 202. Hierzu wird das Zertifikat 170 des Energieversorgers durch die vertrauenswürdige Instanz 150 überprüft. Beispielsweise kann die vertrauenswürdige Instanz 150 bei positiver Zertifikatsüberprüfung ein Challenge-Response-Verfahren durchführen, bei welchem eine Zufallszahl erzeugt wird, welche mit einem im Zertifikat 170 beinhalteten öffentlichen Schlüssel des Energieversorgers 166 verschlüsselt wird und an den Energieversorger 166 übermittelt wird. Der Energieversorger 166 kann daraufhin mit seinem privaten Schlüssel 172 die Zufallszahl entschlüsseln und im Klartext zurücksenden. Stimmt die nun von der vertrauenswürdigen Instanz 150 empfangene Zufallszahl mit der zuvor beschriebenen Zufallszahl überein, ist die Authentizität des Energieversorgers 166 tatsächlich gesichert.

Nach Durchführung des Schritts 202 und dem optionalen Challenge-Response-Verfahren kann daraufhin in Schritt 204 ein Kanal mit Ende-zu-Ende-Verschlüsselung über die Kommunikationsverbindung 188 zwischen Energieversorgung 166 und der vertrauenswürdigen Instanz 150 aufgebaut werden. Hierbei können die Programminstruktionen 114 des Prozessors 158 der vertrauenswürdigen Instanz zum Einsatz kommen.

Nach Aufbau des Kanals in Schritt 204 empfängt die vertrauenswürdige Instanz 150 in Schritt 206 eine Anforderung zum Aufspielen einer Energieerfassungsanwendung 174 des Energieversorgers 166 und dem Speicher 136 des Gateways 138. Um den Speicher 136 bzw. den Gateway 138 eindeutig zu spezifizieren, wird mit der Anforderung zur Initialisierung des Speichers 136 auch die GUID 128 des Gateways 138, welche im Speicher 136 enthalten ist, an die vertrauenswürdige Instanz übermittelt. Vorzugsweise ist die GUID 128 des Speichers 136 identisch mit der GUID 108 des Speichers 102 des Sicherheitsmoduls 100.

Mit Empfang der GUID in Schritt 206 ist die vertrauenswürdige Instanz 150 in der Lage, eindeutig den gewünschten Gateway 138 zur Aufspielung der Anwendung 174 zu adressieren. Hierzu baut in einem nächsten Schritt 208 die vertrauenswürdige Instanz 150 über die Kommunikationsverbindung 190 einen Kommunikationskanal zum Sicherheitsmodul 100 auf. Die vertrauenswürdige Instanz 150 authentifiziert sich gegenüber dem Sicherheitsmodul 100, wobei die Authentifizierung nebst einer Überprüfung des Zertifikats 154 durch das Sicherheitsmodul beispielsweise wiederum ein Challenge-Response-Verfahren seitens des Sicherheitsmodul 100 umfasst. Hierzu könnte das Sicherheitsmodul 100 wiederum eine Zufallszahl erzeugen, mit dem öffentlichen Schlüssel der vertrauenswürdigen Instanz 150 verschlüsseln und an die vertrauenswürdige Instanz 150 senden. Die vertrauenswürdige Instanz 150 würde die verschlüsselte Zufallszahl mit ihrem privaten Schlüssel 156 entschlüsseln und die entschlüsselte Zufallszahl im Klartext zurück an das Sicherheitsmodul 100 senden. Stellt das Sicherheitsmodul fest, dass die so empfangene entschlüsselte Zufallszahl mit der ursprünglich seinerseits verschlüsselten Zufallszahl übereinstimmt, ist eine Authentifizierung der vertrauenswürdigen Instanz gegeben.

Das Verfahren setzt sich dann in Schritt 212 fort, nämlich den Aufbau eines Kommunikationskanals mit Ende-zu-Ende-Verschlüsselung zwischen der vertrauenswürdigen Instanz 150 und dem Sicherheitsmodul 100. Dies kann wiederum durch Verwendung der Programminstruktionen 114 des Prozessors 110 des Sicherheitsmoduls 100 erfolgen.

Im Schritt 214 empfängt das Sicherheitsmodul 100 die Energieerfassungsanwendung 174 von der vertrauenswürdigen Instanz.

An dieser Stelle sei angemerkt, dass es vorteilhaft sein kann, wenn beispielsweise die vertrauenswürdige Instanz die am häufigsten verschickten Energieerfassungsanwendungen in einem lokalen Speicher der vertrauenswürdigen Instanz vorrätig hält, sodass es nicht notwendig ist, bei Erschließung neuer Kunden ständig die Anwendungen 174 von dem Energieversorger 166 an die vertrauenswürdige Instanz 150 zu übertragen.

Nach Empfang der Energieerfassungsanwendung in Schritt 214 speichert das Sicherheitsmodul 100 die Anwendung in dem Speicher 136 des Gateways 138. Handelt es sich bei der Anwendung 174 beispielsweise um eine Anwendung, um Energieverbrauch bezüglich Wasser und Strom zu erfassen, so wird die Anwendung als die Anwendung 132 im Speicher 136 abgelegt. Diese Anwendung ist in der Lage, Energieverbrauchsdaten vom Smart-Meter 144 zu verarbeiten. Analog hierzu kann der Speicher 136 entsprechende Anwendungen für die Energieerfassung von Gas (134) sowie weitere Anwendungen 130 für die Erfassung weiterer Energieformen umfassen. Das Speichern der Energieerfassungsanwendung durch das Sicherheitsmodul 100 im Gateway 138 ist in Figur 2 durch den Schritt 216 gekennzeichnet.

Zusätzlich zu dem Empfang der Energieerfassungsanwendung in Schritt 214 durch das Sicherheitsmodul 100 ist es auch möglich, dass von der vertrauenswürdigen Instanz 150 Energieversorger-spezifische Berechtigungen oder genaue Spezifizierungen von Netzdatenelementen empfangen werden, welche ebenfalls in einem weiteren Bereich 125 des Speichers 136 abgelegt werden. Diese Berechtigungen oder Spezifizierungen von Messdatenelementen ermöglichen es, im Voraus festzulegen, welche Informationen der Energieversorger 166 von dem Gateway 138 überhaupt erhalten darf. Hierzu ist es beispielsweise möglich, dass vorab von der vertrauenswürdigen Instanz 150 für jeden Energieversorger spezifische Berechtigungen definiert werden, welche global für alle Energieversorger 166 gelten und welche grundsätzlich mit der Übertragung von Energieerfassungsanwendungen dem Sicherheitsmodul und damit dem Gateway 138 übermittelt werden.

Ebenfalls möglich ist es, dass Konfigurationsdaten von der vertrauenswürdigen Instanz 150 erhalten werden. Diese Konfigurationsdaten können dabei die technische Konfiguration der Smart Meter und/oder des Gateways betreffen.

Mittels der Programminstruktionen zur Datenerfassung 122 des Prozessors 126 ist nun der Gateway 138 in der Lage, Messdaten bezüglich eines Energieverbrauchs beispielsweise von dem Smart-Meter 144 und dem Smart-Meter 146 zu erfassen. Die entsprechenden Messdaten werden in dem Speicherbereich 124 des Speichers 136 abgelegt. Grundsätzlich bestehen die Messdaten 124 aus verschiedenen Messdatenelementen, welche beispielsweise umfassen können: Zeitpunkt der Erfassung der Messdaten, einzelne Messdatenpunkte zum jeweiligen Zeitpunkt, Informationen über das Zustandekommen der Messdaten (zum Beispiel Stromstärke, Spannung, Wasserdruck, Wassertemperatur, Gasdruck). Die Messdaten 124 können über die Anwendungen 130, 132 und 134 einer weiteren Auswertung unterzogen werden, woraus sich ausgewertete Messdaten ergeben, welche ebenfalls als "Messdatenelemente" im Speicherbereich 124 abgelegt werden können. Beispielsweise kann es sich bei den ausgewerteten Messdaten um akkumulierte Energieverbrauchswerte handeln.

Die obig beschriebenen Berechtigungen 125 bzw. die Spezifizierungen der Messdatenelemente ermöglichen es, von vornherein festzulegen, welche dieser Messdatenelemente 124 der Energieversorger 126 überhaupt abrufen darf. Ferner ermöglicht dies, von vornherein festzulegen, wie detailliert ein solches Abrufen erlaubt ist. Ein so detailliertes und zeitgenaues Abrufen der Messdaten 124 könnte dabei unerwünscht sein, da sich durch kurze Zeitintervalle von Messungen Erkenntnisse der Nutzung von elektronischen Geräten gewinnen und dadurch Benutzerprofile erstellt werden können, woran ein Endkunde jedoch gegebenenfalls kein Interesse haben könnte.

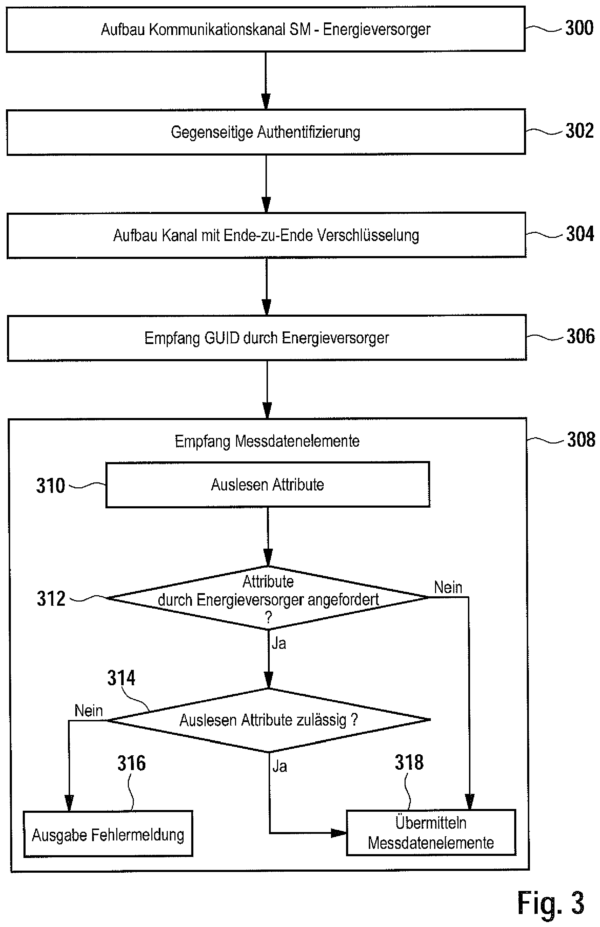

Im Hinblick auf das Flussdiagramm der Figur 3 und der Annahme, dass Messdaten 124 durch den Gateway 138 erfasst wurden, sei nun im Folgenden beschrieben, wie die Messdaten zur Endabrechnung an den Energieversorger 166 übermittelt werden können. Im Folgenden wird dabei ohne Beschränkung der Allgemeinheit davon ausgegangen, dass der Energieversorger 166 die "Ablesung", das heißt die Erfassung der im Speicher 136 enthaltenen Messdaten vornimmt. Jedoch ist es auch möglich, dass der Energieversorger 166 hierfür einen sogenannten Messstellenbetreiber beauftragt. Ein Messstellenbetreiber ist dabei ein Computersystem, welches im Auftrag des Energieversorgers 166 eine Erfassung der im Gateway 138 enthaltenen Messdaten vornimmt. Die im Folgenden beschriebenen Schritte, welche bezüglich des Energieversorgers 166 durchgeführt werden, gelten dabei analog im Falle des Ersetzens des Energieversorgers 166 durch einen entsprechenden Messstellenbetreiber.

In Schritt 300 wird seitens des Gateways 138 der Aufbau eines Kommunikationskanals mit dem Energieversorger 166 initiiert, wobei den eigentlichen Aufbau des Kommunikationskanals das Sicherheitsmodul 100 vornimmt. Hierzu kommunizierende Gateway 138 und das Sicherheitsmodul 100 über ihre jeweiligen Interfaces 118 bzw. 116. Über das Netzwerk 190, beispielsweise das Internet oder eine Powerline-Verbindung, findet in Schritt 302 eine gegenseitige Authentifizierung des Sicherheitsmoduls 100 und des Energieversorgers 166 statt. Hierzu kann wiederum eine gegenseitige Zertifikatsüberprüfung mittels der Zertifikate 104 und 170 durchgeführt werden. Zusätzlich ist es auch optional möglich, ein Challenge-Response-Verfahren zwischen Sicherheitsmodul 100 und Energieversorger 166 durchzuführen.

Nach erfolgreicher gegenseitigen Authentifizierung erfolgt in Schritt 304 der Aufbau eines Kommunikationskanals mit Ende-zu-Ende-Verschlüsselung, vorzugsweise initiiert mittels der Programminstruktion 114 des Sicherheitsmoduls 100. Der Energieversorger 166 empfängt in Schritt 306 die GUID 108 des Sicherheitsmoduls, weiche vorzugsweise mit der GUID 128 des Gateways übereinstimmt. Anhand der GUID 108 ist der Energieversorger 166 in der Lage, die zu empfangenden Messdaten auf dem richtigen Gateway und damit dem richtigen Endverbraucher zuzuordnen.

In Schritt 308 erfolgt der Empfang der Messdatenelemente durch den Energieversorger 166. Schritt 308 gliedert sich dabei wiederum in eine optionale Zahl weiterer Schritte 310 bis 318 auf. So findet beispielsweise in Schritt 310 durch das Sicherheitsmodul 100 ein Auslesen der Attribute, das heißt der Berechtigungen 125 aus dem Speicher 136 statt, um festzustellen, welche Messdatenelemente überhaupt an den Energieversorger 166 übermittelt werden sollen. Die Berechtigungen können dem Sicherheitsmodul 100 durch den obig beschriebenen Initialisierungsvorgang mitgeteilt worden sein. Alternativ oder zusätzlich ist es auch möglich, dass die Berechtigungen in einem Zertifikat enthalten sind, welches von dem Energieversorger 166 durch das Sicherheitsmodul erhalten wird.

Es sei angemerkt, dass hier anstatt oder zusätzlich zu den Messdatenelementen auch in analoger weise Konfigurationsdaten an den Energieversorger 166 übermittelt werden können.

Wurden mit der soeben stattfindenden gegenseitigen Kommunikation keine spezifischen Attribute durch den Energieversorger 166 angefordert, so entscheidet Schritt 312, dass pauschal ein vordefinierter Teil der durch die Attribute spezifizierten Messdatenelemente in Schritt 318 an den Energieversorger 166 übermittelt werden. Wurde hingegen im Zuge der Kommunikation ein spezielles Attribut durch den Energieversorger angefordert, folgt in Schritt 314 eine Überprüfung, ob das Auslesen eines solchen Attributs, das heißt eines entsprechenden Messdatenelements durch den Energieversorger überhaupt zulässig ist. Ist dies nicht der Fall, erfolgt im Schritt 316 ein Abbruch des Verfahrens und Ausgabe einer Fehlermeldung an den Energieversorger 166. Ist hingegen das Auslesen der Attribute zulässig, erfolgt in Schritt 318 wiederum das Übermitteln der Messdatenelemente, welche durch dieses angeforderte Attribut spezifiziert werden.

Das Anfordern spezifischer Messdatenelemente durch den Energieversorger 166 könnte dann relevant sein, wenn beispielsweise der Energieversorger über eine Vielzahl von Berechtigungen zum Auslesen von Informationen aus dem Gateway besitzt, jedoch von all seinen Berechtigungen im Zuge einer bloßen üblichen Energieverbrauchsabrechnung überhaupt keinen Gebrauch machen möchte. So könnten die spezifizierten Messdatenelemente auch Informationen über einen ordnungsgemäßen Funktionsbetrieb des Gateways oder der angeschlossenen Smart-Meter enthalten, wobei im normalen Betrieb der Energieversorger 166 überhaupt nicht an diesen eher zu diagnostischen Zwecken dienenden Informationen interessiert ist. In diesem Fall würde vom Energieversorger 166 lediglich die Daten angefordert werden, welche auch tatsächlich zu einer Energieverbrauchsabrechnung relevant sind.

Die Datenübermittlung vom Gateway 138 über das Sicherheitsmodul 100 an den Energieversorger 166 erfolgt mittels Programminstruktionen 120 des Prozessors 126.

Bezüglich Figur 3 sei noch angemerkt, dass hier davon ausgegangen wurde, dass der Aufbau des Kommunikationskanals seitens des Gateways 138 unter Verwendung des Sicherheitsmoduls erfolgte. Z.B. initiierte eine der Anwendungen 130 - 134 den Aufbau des Kommunikationskanals aufgrund, beispielsweise Ablauf eines entsprechenden Timers.

Allerdings ist es auch möglich, dass der Energieversorger 166 auf eigene Initiative eine Kommunikation mit dem Gateway 138 über das Sicherheitsmodul 100 initiiert. In diesem Fall wird also aktiv eine Abfrage der Messdaten 144 durch den Energieversorger 166 vorgenommen.

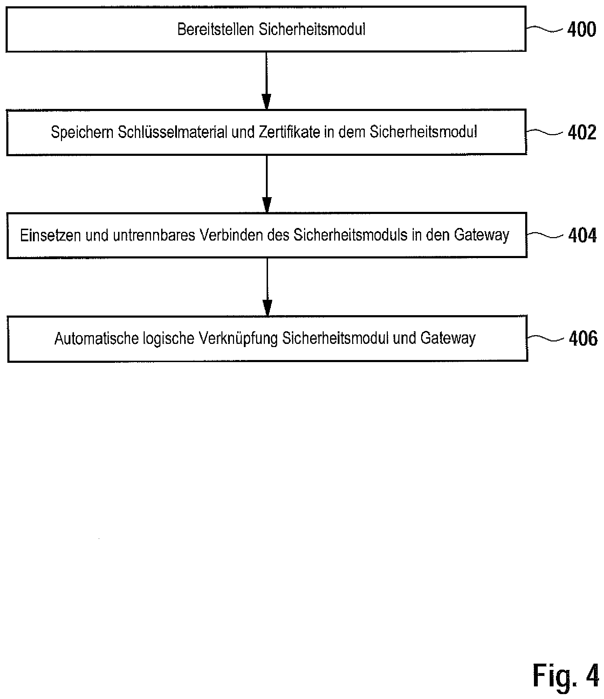

Wie bereits oben erwähnt, sind vorzugsweise das Sicherheitsmodul 100 und der Gateway 138 untrennbar miteinander verbunden. Beispielsweise bilden diese eine bauliche Einheit 140, wie dies in Figur 1 schematisch gezeigt ist. Um diese Einheit 140 zu erzeugen, könnten die in dem Flussdiagramm der Figur 4 erläuterten Verfahrensschritte durchgeführt werden.

In Schritt 400 wird zunächst das Sicherheitsmodul 100 bereitgestellt. Daraufhin erfolgt in Schritt 402 das Speichern von Schlüsselmaterial und von Zertifikaten in dem Sicherheitsmodul. Beispielsweise könnte hierzu das Sicherheitsmodul eine entsprechende kryptografische Einheit aufweisen, mittels welcher selbständig der private Schlüssel 106 erzeugt wird. Alternativ ist es auch möglich, dass die vertrauenswürdige Instanz den privaten Schlüssel erzeugt und in dem Sicherheitsmodul in einem von außen nicht zugänglichen Speicherbereich ablegt. Der zu dem privaten Schlüssel gehörende öffentliche Schlüssel wird dem Zertifikat beigelegt, welches dann durch die vertrauenswürdige Instanz signiert wird und in dem Speicher 102 des Sicherheitsmoduls abgelegt wird.

Daraufhin wird das Sicherheitsmodul in Schritt 404 in das Gateway beispielsweise in Form einer Chipkarte eingesetzt und es wird ein untrennbares Verbinden von Sicherheitsmodul und Gateway vorgenommen. Beispielsweise könnten Sicherheitsmodul und Gateway elektronisch so aneinander gekoppelt werden, dass ein Entfernen des Sicherheitsmoduls vom Gateway zum automatischen Zerstören des Sicherheitsmoduls führen würde.

Nach Einsetzen des Sicherheitsmoduls in den Gateway 404 erfolgt im Schritt 406 eine automatische logische Verknüpfung von Sicherheitsmodul 100 und Gateway 138. Beispielsweise könnte dies dadurch erfolgen, dass die GUID 108 des Sicherheitsmoduls irreversibel in den Speicher 136 des Gateways 138 als GUID 128 geschrieben wird. Hierbei sollte seitens zum Beispiel des Sicherheitsmoduls 100 sichergestellt sein, dass eine Kommunikation mit dem Gateway 138 zur Bereitstellung von Messdatenelementen und über den Energieversorger 166 nur dann stattfindet, wenn eine Identität der GUID 108 und 128 gegeben ist.

### Bezugszeichenliste

- 100: Sicherheitsmodul
- 102: Speicher
- 104: Zertifikat
- 106: privater Schlüssel
- 108: GUID
- 110: Prozessor
- 112: kryptographisches Protokoll
- 114: Ende-zu-Ende-Verschlüsselung
- 116: Interface
- 118: Interface
- 120: Datenübermittlung
- 122: Datenerfassung
- 124: Messdaten
- 125: Berechtigung
- 126: Prozessor
- 128: GUID
- 130: Anwendung
- 132: Anwendung
- 134: Anwendung
- 136: Speicher
- 138: Speicher
- 140: Einheit
- 142: Smart-Meter
- 144: Smart-Meter
- 146: Smart-Meter
- 148: Smart-Meter
- 150: vertrauenswürdige Instanz
- 152: Speicher
- 154: Zertifikat
- 156: privater Schlüssel
- 158: Prozessor
- 164: Interface
- 166: Energieversorger
- 168: Speicher
- 170: Zertifikat
- 172: privater Schlüssel
- 174: Anwendung
- 176: Messdaten
- 178: Prozessor
- 180: Datenerfassung
- 182: Verbrauchsabrechnung
- 186: Interface
- 188: Kommunikationsverbindung
- 190: Kommunikationsverbindung
- 192: Kommunikationsverbindung

## Patentansprüche

1. Verfahren zur Initialisierung eines Speicherbereichs (136), wobei der Speicherbereich (136) einem Smart Meter (142; 144; 146; 148) zugeordnet ist, wobei das Verfahren die Schritte umfasst:
- Aufbau eines ersten Kommunikationskanals zwischen einem ersten Computersystem (150) und einem Sicherheitsmodul (100), wobei das Sicherheitsmodul (100) dem Speicherbereich (136) zugeordnet ist,
- Authentifizierung des ersten Computersystems (150) gegenüber dem Sicherheitsmodul (100),
- Nach erfolgreicher Authentifizierung des ersten Computersystems (150) gegenüber dem Sicherheitsmodul (100), Empfang von Daten von dem ersten Computersystem (150) durch das Sicherheitsmodul (100) durch eine gesicherte Übertragung und Speicherung der Daten in dem Speicherbereich (136) zur Initialisierung des Speicherbereichs (136),
wobei dem Smart Meter Konfigurationsdaten zum Betrieb des Smart Meters und/oder Gateways zugeordnet sind, wobei durch das Smart Meter (142; 144; 146; 148) energieverbrauchsspezifische Messdatenelemente erfassbar sind, wobei die von dem ersten Computersystem (150) empfangenen Daten eine Angabe (125) derjenigen Messdatenelemente und/oder Konfigurationsdaten beinhaltet, für welche der Energieversorger und/oder der Messstellenbetreiber für einen Lesezugriff berechtigt ist,
wobei das Verfahren ferner die Schritte umfasst:
- Aufbau eines zweiten Kommunikationskanals zwischen einem zweiten Computersystem (166) des Energieversorgers und/oder Messstellenbetreibers und dem Sicherheitsmodul (100), wobei der Aufbau von dem zweiten Computersystem initiiert wird (166),
- Gegenseitige Authentifizierung des zweiten Computersystems (166) und des Sicherheitsmoduls (100),
- Nach erfolgreicher gegenseitiger Authentifizierung, Empfang einer Anforderung eines speziellen Attributs von dem zweiten Computersystem (166),
- Überprüfung, ob der Energieversorger und/oder der Messstellenbetreiber für einen Lesezugriff auf ein von dem angeforderten Attribut spezifiziertes Messdatenelement und/oder Konfigurationsdaten berechtigt ist,
- Übermittelung des Messdatenelements und/oder von Konfigurationsdaten, welche von dem angeforderten Attribut spezifiziert werden, von dem Sicherheitsmodul (100) an das zweite Computersystem (166) durch eine gesicherte Übertragung.

2. Verfahren nach Anspruch 1, wobei die gesicherte Übertragung durch eine Ende-zu-Ende Verschlüsselung zwischen dem ersten Computersystem (150) und dem Sicherheitsmodul (100) erfolgt und/oder wobei die Authentifizierung des ersten Computersystems (150) gegenüber dem Sicherheitsmodul (100) mit Hilfe eines ersten Zertifikats (154) des ersten Computersystems (150) erfolgt.

3. Verfahren nach einem der vorigen Ansprüche 1 oder 2, wobei die Authentifizierung ein Challenge-Response-Verfahren umfasst und/oder wobei
- der Speicherbereich (136) und das Sicherheitsmodul (100) in dem Smart Meter (142; 144; 146; 148) enthalten sind oder
- der Speicherbereich (136) und das Sicherheitsmodul (100) in einem Smart Meter Gateway (138) enthalten sind, wobei das Smart Meter (142; 144; 146; 148) an den Smart Meter Gateway (138) ankoppelbar ist.

4. Verfahren nach einem der vorigen Ansprüche, wobei
die gegenseitige Authentifizierung des zweiten Computersystems (166) und des Sicherheitsmoduls (100) mit Hilfe eines zweiten Zertifikats des Energieversorgers und/oder Messstellenbetreibers und mit Hilfe eines dritten Zertifikats (104) des Sicherheitsmoduls (100) erfolgt.

5. Verfahren nach Anspruch 4, wobei die von dem ersten Computersystem (150) empfangenen Daten eine Energieerfassungsanwendung (130; 132; 134; 174) und/oder zumindest einen Teil der Konfigurationsdaten umfassen.

6. Verfahren nach einem der vorigen Ansprüche, ferner mit den folgenden Schritten:
- Aufbau eines dritten Kommunikationskanals zwischen dem zweiten Computersystem (166) und dem ersten Computersystem (150),
- Authentifizierung des zweiten Computersystems (166) gegenüber dem ersten Computersystem (150),
- Nach erfolgreicher Authentifizierung des zweiten Computersystems (166) gegenüber dem ersten Computersystem (150), Empfang einer Anforderung zur Initialisierung des Speicherbereichs (136) von dem zweiten Computersystem (166) durch das erste Computersystem, wobei die Anforderung eine Kennung (108; 128) des Speicherbereichs (136) umfasst, wobei die Kennung (108; 128) den Speicherbereich (136) eindeutig identifiziert.

7. Verfahren nach Anspruch 6, wobei die Kennung (108; 128) des Speicherbereichs (136) durch eine Kennung (108; 128) des Sicherheitsmoduls (100) gegeben ist.

8. Verfahren nach Anspruch 7, wobei es sich bei der Kennung (108; 128) des Sicherheitsmoduls (100) um einen öffentlichen Schlüssel des Sicherheitsmoduls (100) oder eine IPv6-Adresse des Sicherheitsmoduls (100) handelt.

9. Verfahren nach Anspruch 8, wobei das dritte Zertifikat (104) den öffentlichen Schlüssel des Sicherheitsmoduls (100) beinhaltet.

10. Verfahren nach einem der vorigen Ansprüche, wobei das Sicherheitsmodul (100) untrennbar mit dem Smart Meter (142; 144; 146; 148) oder dem Smart Meter Gateway (138) verbunden wird.

11. Computerprogrammprodukt mit von einem Prozessor ausführbaren Instruktionen zur Durchführung der Verfahrensschritte gemäß einem der vorigen Ansprüche.

12. Sicherheitsmodul (100), wobei das Sicherheitsmodul (100) einem Speicherbereich (136) zuordenbar ist, wobei der Speicherbereich (136) einem Smart Meter (142; 144; 146; 148) zugeordnet ist, wobei das Sicherheitsmodul (100) zur Initialisierung des Speicherbereichs (136) ausgebildet ist, wobei das Sicherheitsmodul (100) ferner aufweist:
- Mittel zum Aufbau eines ersten Kommunikationskanals mit einem ersten Computersystem (150),
- Mittel (112) zur Authentifizierung des ersten Computersystems (150) gegenüber dem Sicherheitsmodul (100),
- Mittel (116) zum Empfang von Daten von dem ersten Computersystem (150) durch das Sicherheitsmodul (100) durch eine gesicherte Übertragung und Speicherung der Daten in dem Speicherbereich (136) zur Initialisierung des Speicherbereichs (136) nach erfolgreicher Authentifizierung des ersten Computersystems (150) gegenüber dem Sicherheitsmodul (100),
wobei die von dem ersten Computersystem (150) empfangenen Daten eine Angabe (125) derjenigen Messdatenelemente und/oder Konfigurationsdaten beinhaltet, für welche der Energieversorger und/oder der Messstellenbetreiber für einen Lesezugriff berechtigt ist,
wobei das Sicherheitsmodul (100) ferner aufweist:
- Mittel zum Aufbau eines zweiten Kommunikationskanals mit einem zweiten Computersystem (166) des Energieversorgers und/oder Messstellenbetreibers, wobei der Aufbau von dem zweiten Computersystem initiiert wird (166),
- Mittel (112) zur gegenseitige Authentifizierung des zweiten Computersystems (166) und des Sicherheitsmoduls (100),
- Mittel zum Empfang einer Anforderung eines speziellen Attributs von dem zweiten Computersystem (166), nach erfolgreicher gegenseitiger Authentifizierung,
- Mittel zur Überprüfung, ob der Energieversorger und/oder der Messstellenbetreiber für einen Lesezugriff auf ein von dem angeforderten Attribut spezifiziertes Messdatenelement und/oder Konfigurationsdaten berechtigt ist,
- Mittel zur Übermittlung des Messdatenelements und/oder von Konfigurationsdaten, welche von dem angeforderten Attribut spezifiziert werden, an das zweite Computersystem (166) durch eine gesicherte Übertragung.

## Claims

1. A method for initialising a memory area (136), wherein the memory area (136) is associated with a smart meter (142; 144; 146; 148), wherein the method comprises the following steps:
- establishing a first communication channel between a first computer system (150) and a security module (100), wherein the security module (100) is associated with the memory area (136),
- authenticating the first computer system (150) with respect to the security module (100),
- after successfully authenticating the first computer system (150) with respect to the security module (100), receiving data from the first computer system (150) via the security module (100) by secure transmission and storage of the data in the memory area (136) for initialising the memory area (136),
wherein configuration data for operating the smart meter and/or the gateway is associated with the smart meter, wherein by way of the smart meter (142; 144; 146; 148) energy consumption-specific measurement data elements can be acquired, wherein the data received from the first computer system (150) contains a statement (125) of those measurement data elements and/or configuration data to which the utility company and or the metering point operator is authorised for read access,
wherein the method also comprises the following steps:
- establishing a second communication channel between a second computer system (166) of the utility company and/or metering point operator and the security module (100), wherein the establishment of the second computer system is initiated (166),
- mutually authenticating the second computer system (166) and the security module (100),
- after successful mutual authentication, receiving a request for a special attribute from the second computer system (166),
- checking whether the utility company and/or the metering point operator is authorised for read access to a measurement data element and/or configuration data specified by the requested attribute,
- transmitting the measurement data element and/or configuration data specified by the requested attribute from the security module (100) to the second computer system (166) by secure transmission.

2. The method according to claim 1, wherein the secure transmission is accomplished by an end-to-end encryption between the first computer system (150) and the security module (100), and/or wherein the first computer system (150) is authenticated with respect to the security module (100) with the help of a first certificate (154) of the first computer system (150).

3. The method according to either one of claims 1 or 2, wherein the authentication comprises a challenge-response process and/or wherein
- the memory area (136) and the security module (100) are contained in the smart meter (142; 144; 146; 148) or
- the memory area (136) and the security module (100) are contained in a smart meter gateway (138), wherein the smart meter (142; 144; 146; 148) can be coupled to the smart meter gateway (138).

4. The method according to any one of the preceding claims, wherein the second computer system (166) and the security module (100) are mutually authenticated with the help of a third certificate (104) of the security module (100).

5. The method according to claim 4, wherein the data received from the first computer system (150) comprises an energy acquisition application (130; 132; 134; 174) and/or at least some of the configuration data.

6. The method according to any one of the preceding claims, further comprising the following steps:
- establishing a third communication channel between the second computer system (166) and the first computer system (150),
- authenticating the second computer system (166) with respect to the first computer system (150),
- after successful authentication of the second computer system (166) with respect to the first computer system (150), receiving a request for initialisation of the memory area (136) from the second computer system (166) by the first computer system, wherein the request comprises an identification (108; 128) of the memory area (136), wherein the identification (108, 128) uniquely identifies the memory area (136) .

7. The method according to claim 6, wherein the identification (108; 128) of the memory area (136) is provided by an identification (108; 128) of the security module (100).

8. The method according to claim 7, wherein the identification (108; 128) of the security module (100) is a public key of the security module (100), or an IPv6 address of the security module (100).

9. The method according to claim 8, wherein the third certificate (104) contains the public key of the security module (100).

10. The method according to any one of the preceding claims, wherein the security module (100) is connected inseparably to the smart meter (142; 144; 146; 148) or the smart meter gateway.

11. A computer program product with instructions that can be executed by a processor in order to carry out the method steps according to any one of the preceding claims.

12. A security module (100), wherein the security module (100) can be associated with a memory area (136), wherein the memory area (136) can be associated with a smart meter (142; 144; 146; 148), wherein the security module (100) is designed for initialising the memory area (136), wherein the security module (100) also comprises:
- means for establishing a first communication channel with a first computer system (100),
- means (112) for authenticating the first computer system (150) with respect to the security module (100),
- means (116) for receiving data from the first computer system (150) by way of the security module (100) by secure transmission and storing the data in the memory area (136) for initialising the memory area (136) after successful authentication of the first computer system (150) with respect to the security module (100),
wherein the data received from the first computer system (150) contains a statement (125) of those measurement data elements and/or configuration data to which the utility company and or the metering point operator is authorised for read access,
wherein the security module (100) also comprises:
- means for establishing a second communication channel with a second computer system (166) of the utility company and/or metering point operator, wherein the establishment is initiated (166) by the second computer system,
- means (112) for mutual authentication of the second computer system (166) and the security module (100),
- means for receiving a request of a special attribute from the second computer system (166), after successful mutual authentication,
- means for checking whether the utility company and/or the metering point operator is authorised for read access to a measurement data element and/or configuration data specified by the requested attribute,
- means for transmitting the measurement data element and/or configuration data, which is specified by the requested attribute, to the second computer system (166) by secure transmission.

## Revendications

1. Procédé d'initialisation d'une zone de mémoire (136), dans lequel un compteur intelligent (142 ; 144 ; 146 ; 148) est associé à la zone de mémoire (136), le procédé comprenant les étapes :
- d'établissement d'un premier canal de communication entre un premier système informatique (150) et un module de sécurité (100), le module de sécurité (100) étant associé à la zone de mémoire (136),
- d'authentification du premier système informatique (150) vis-à-vis du module de sécurité (100),
- après l'authentification réussie du premier système informatique (150) vis-à-vis du module de sécurité (100), de réception de données du premier système informatique (150) par le module de sécurité (100) par une transmission sécurisée et de stockage des données dans la zone de mémoire (136) pour l'initialisation de la zone de mémoire (136),
dans lequel des données de configuration sont associées au compteur intelligent pour la mise en oeuvre du compteur intelligent et/ou de la passerelle, où des éléments de données de mesure spécifiques à la consommation d'énergie peuvent être saisis par le compteur intelligent (142 ; 144 ; 146 ; 148), où les données reçues par le premier système informatique (150) contiennent une indication (125) des éléments de données de mesure en question et/ou des données de configuration pour lesquelles le fournisseur d'énergie et/ou le gestionnaire de compteur est habilité pour un accès en lecture,
le procédé comprenant en outre les étapes :
- d'établissement d'un deuxième canal de communication entre un deuxième système informatique (166) du fournisseur d'énergie et/ou du gestionnaire de compteur et le module de sécurité (100), où l'établissement est initié par le deuxième système informatique (166),
- d'authentification réciproque du deuxième système informatique (166) et du module de sécurité (100),
- après l'authentification réciproque réussie, de réception d'une requête d'un attribut spécial par le deuxième système informatique (166),
- de vérification si le fournisseur d'énergie et/ou le gestionnaire de compteur habilité pour un accès en lecture d'un élément de donnée de mesure spécifié par l'attribut invoqué et/ou de données de configuration,
- de transmission de l'élément de donnée de mesure et/ou de données de configuration, lesquelles sont spécifiées par l'attribut invoqué, du module de sécurité (100) vers le deuxième système informatique (166) par une transmission sécurisée.

2. Procédé selon la revendication 1, dans lequel la transmission sécurisée a lieu par un cryptage de bout en bout entre le premier système informatique (150) et le module de sécurité (100) et/ou dans lequel l'authentification du premier système informatique (150) vis-à-vis du module de sécurité (100) a lieu à l'aide d'un premier certificat (154) du premier système informatique (150).

3. Procédé selon l'une des revendications précédentes 1 ou 2, dans lequel l'authentification comprend un procédé de défi et de réponse et/ou dans lequel
- la zone de mémoire (136) et le module de sécurité (100) sont contenus dans le compteur intelligent (142 ; 144 ; 146 ; 148) ou
- la zone de mémoire (136) et le module de sécurité (100) sont contenus dans une passerelle (138) de compteur intelligent, le compteur intelligent (142 ; 144 ; 146 ; 148) pouvant être accouplé à la passerelle (138) de compteur intelligent.

4. Procédé selon l'une des revendications précédentes, dans lequel
l'authentification réciproque du deuxième système informatique (166) et du module de sécurité (100) a lieu à l'aide d'un deuxième certificat du fournisseur
d'énergie et/ou du gestionnaire de compteur et à l'aide d'un troisième certificat (104) du module de sécurité (100).

5. Procédé selon la revendication 4, dans lequel les données reçues par le premier système informatique (150) comprennent une application de saisie d'énergie (130 ; 132 ; 134 ; 174) et/ou au moins une partie des données de configuration.

6. Procédé selon l'une des revendications précédentes, avec, en outre, les étapes suivantes :
- l'établissement d'un troisième canal de communication entre le deuxième système informatique (166) et le premier système informatique (150),
- l'authentification du deuxième système informatique (166) vis-à-vis du premier système informatique (150),
- après l'authentification réussie du deuxième système informatique (166) vis-à-vis du premier système informatique (150), la réception d'une requête pour l'initialisation de la zone de mémoire (136) à partir du deuxième système informatique (166) par le premier système informatique, où la requête comprend un identifiant (108 ; 128) de la zone de mémoire (136), l'identifiant (108 ; 128) identifiant clairement la zone de mémoire (136).

7. Procédé selon la revendication 6, dans lequel l'identifiant (108 ; 128) de la zone de mémoire (136) est donné par un identifiant (108 ; 128) du module de sécurité (100).

8. Procédé selon la revendication 7, dans lequel, dans le cas de l'identifiant (108 ; 128) du module de sécurité (100), il s'agit d'une clé publique du module de sécurité (100) ou d'une adresse IPv6 du module de sécurité (100).

9. Procédé selon la revendication 8, dans lequel le troisième certificat (104) contient la clé publique du module de sécurité (100).

10. Procédé selon l'une des revendications précédentes, dans lequel le module de sécurité (100) est relié de manière indissociable avec le compteur intelligent (142 ; 144 ; 146 ; 148) ou avec la passerelle (138) de compteur intelligent.

11. Produit-programme informatique avec des instructions exécutables par un processeur pour la réalisation des étapes de procédé selon l'une des revendications précédentes.

12. Module de sécurité (100), le module de sécurité étant associé à une zone de mémoire (136), où la zone de mémoire (136) est associée à un compteur intelligent (142 ; 144 ; 146 ; 148), où le module de sécurité (100) est conçu pour l'initialisation de la zone de mémoire (136), le module de sécurité (100) comprenant en outre :
- des moyens pour l'établissement d'un premier canal de communication avec un premier système informatique (150),
- des moyens (112) pour l'authentification du premier système informatique (150) vis-à-vis du module de sécurité (100),
- des moyens (116) pour la réception de données provenant du premier système informatique (150) par le module de sécurité (100) par une transmission sécurisée et le stockage des données dans la zone de mémoire (136) pour l'initialisation de la zone de mémoire (136) après l'authentification réussie du premier système informatique (150) vis-à-vis du module de sécurité (100),
dans lequel les données reçues à partir du premier système informatique (150) contiennent une indication (125) des éléments de données de mesure en question et/ou des données de configuration pour lesquels le fournisseur d'énergie et/ou le gestionnaire de compteur a une autorisation pour un accès en lecture,
où le module de sécurité (100) présente en outre :
- des moyens pour l'établissement d'un deuxième canal de communication avec un deuxième système informatique (166) du fournisseur d'énergie ou du gestionnaire de compteur, l'établissement étant initié par le deuxième système informatique (166),
- des moyens (112) pour l'authentification du deuxième système informatique (166) vis-à-vis du module de sécurité (100),
- des moyens pour la réception d'une requête d'un attribut spécial du deuxième système informatique (166) après l'authentification réciproque réussie,
- des moyens pour la vérification si le fournisseur d'énergie et/ou le gestionnaire de compteur est habilité pour un accès en lecture de l'élément de donnée de mesure spécifié par l'attribut invoqué et/ou des données de configuration,
- des moyens pour la transmission de l'élément de donnée de mesure et/ou des données de configuration, lesquels sont spécifiés par l'attribut invoqué, vers le deuxième système informatique (166) par la transmission sécurisée.
